# EUROPEAN PATENT SPECIFICATION

(11) **EP 1 404 983 B1**
(45) Date of publication and mention of the grant of the patent: **16.03.2005**
(21) Application number: 02756154.7
(22) Date of filing: 11.06.2002
(51) Int. Cl.: F16C 33/26

(54) **CONTACT BEARING**
KONTAKTLAGER
PALIER A CONTACT

(30) Priority: 11.06.2001 US 297427 P; 12.03.2002 US 363696 P
(43) Date of publication of application: 07.04.2004
(73) Proprietor: Tribotek Inc., Cambridge, MA 02139 (US)
(72) Inventor: SUH, Nam, P., Sudbury, MA 01720 (US); SWEETLAND, Matthew, Massachusetts 01803 (US)
(74) Representative: HOFFMANN - EITLE
(86) International application number: PCT/US2002/018383
(87) International publication number: WO 2002/101252

(56) References cited:
- WO-A-94/08149
- DE-U- 7 114 821
- DE-U- 8 914 996
- FR-A- 1 184 832
- GB-A- 746 463
- US-A- 2 768 034
- US-A- 4 263 243

## Description

### FIELD OF THE INVENTION

The present invention relates to a contact bearing and more particularly to a sliding contact bearing with an increased service life.

### BACKGROUND OF INVENTION

Bearings are used in a wide variety of applications. Representative example applications include simple door hinges, internal combustion engines, heavy duty construction equipment, other applications that subject a bearing to corrosive materials, abrasive particles, and non-lubricated environments. In these applications and others, bearings support contact forces between connected objects while allowing the objects to move relative to one another, either through linear motion, rotational motion, or a combination thereof.

Wear is the degradation that can occur to a bearing through extended use. Wear is often associated with an increase in friction, which is the resistance to relative motion between objects. Many causes of friction also contribute to wear, including loose particles plowing into the bearing, and asperity interactions at the surfaces of the bearing. These causes can also lead to bearing failure. and/or increased friction throughout the life of a bearing.

Prior art bearings are known that address plowing by providing one surface much softer than the surface it contacts. Having one surface much softer reduces friction by allowing the majority of plowing to take place in the softer material. In this respect, cutting grooves (plowing) in the softer material requires less energy than cutting grooves into very hard materials, so the resulting friction force is less. To a lesser extent, making one surface softer may allow a loose particle to be embedded into the softer surface and therefore be substantially removed from the interface between the surfaces. Prior art bearings also reduce plowing by introducing particle traps that reduce the amount of particles between bearing surfaces by allowing the particles to collect away from the bearing surface. Asperity interactions have been addressed in the prior art by reducing the amount and severity of asperity interactions that exist through improved bearing surface finishes.

Plowing or asperity interactions are not as problematic for some types of bearings. For instance, plowing and asperity interactions are less of a concern for hydrodynamic bearings which do not normally make direct contact with each other during operation.

DE-A-G89 14 996.3 discloses a journal bearing which consists of a circle of circumferentially-spaced, radially inwardly extending flexible polymeric members, which support the shaft on their cantilevered, radially inward ends.

### SUMMARY OF THE INVENTION

The contact bearing defined in claim 1 is adapted to support an opposed bearing surface for controlled relative movement. The bearing is constructed to have a long service life by addressing soma causes of wear that can reduce bearing life. The bearing may include one or more features, each independently or in combination, that contribute to prolonged bearing life and lower friction. Claim 28 defines a method of accommodating irregularities, asperities, or loose particle in a contact bearing.

Further embodiments are described in the dependent claims

Various embodiments of the present invention provide certain advantages and overcome certain drawbacks of prior contact bearings.

Embodiments of the invention may not share the same advantages, and those that do may not share them under all circumstances. This being said, the present invention provides numerous advantages including the noted advantage of increased service life and/or high performance characteristics.

Further features and advantages of the present invention, as well as the structure of various embodiments, are described in detail below with reference to the accompanying drawings.

### BRIEF DESCRIPTION OF THE DRAWINGS

Various embodiments of the invention will now be described, by way of example, with reference to the accompanying drawings, in which:
Figure 1 is a schematic representation of a cylindrical bearing according to one aspect of the invention;
Figure 2 is a perspective view of a cylindrical bearing having an inner surface comprising a locally compliant surface according to another aspect of the invention;
Figure 2A is a schematic end view of a bearing;
Figure 3 is a perspective view of a cylindrical bearing having a locally compliant outer surface according to yet another aspect of the invention;
Figure 4 is a perspective view of a cylindrical bearing having both inner and outer locally compliant surfaces according to still another aspect of the invention;
Figure 5A is a perspective view of plowing between two opposed bearing surfaces;
Figure 5B is a perspective view of asperity interaction between two opposed bearing surfaces;
Figure 6 is a schematic view taken along lines 6-6 of figure 2A, showing a plurality of support members formed on a bearing according an aspect of the invention;
Figure 7 is a schematic representation of a plurality of support members formed on a bearing with material disposed in the gaps defined by the support members according to another aspect of the invention;
Figures 8A-8D shows schematic representations of several embodiments of the support members formed on a bearing according to several aspects of the invention;
Figure 9 is a schematic representation of a linear bearing according to one aspect of the invention;
Figure 10 is a perspective view of a linear bearing having a locally compliant surface according to another aspect of the invention;
Figure 11 is a schematic representation of a locally compliant bearing according to an aspect of the invention;
Figure 12 is a perspective view of a cylindrical bearing having a locally compliant surface according to another aspect of the invention;
Figure 13 is a graph of experimental results obtained in part with the embodiment shown in Figure 12; and
Figure 14 is a cross section schematic of another embodiment according to an aspect of the invention.

### DETAILED DESCRIPTION

The bearing of the present invention is adapted to support and allow controlled relative movement with an opposed bearing or bearing surface. The bearing is constructed to have a long life by incorporating a locally compliant surface that addresses many causes of friction and wear. The bearing may include one or more features, each independently or in combination, contributing to prolonged bearing life and/or lower friction throughout the life of the bearing.

In one aspect, the bearing comprises a plurality of support members extending from a base. Together, the plurality of support members can support a load applied to the base through an opposed bearing or surface. Additionally, the plurality of support members allow sliding contact between the opposed bearings. The support members can move independently to accommodate irregularities, such as asperities or loose particles located between the support member and the opposed hearing, such that wear is minimized, as will be explained below. Portions of the plurality of support members may also move together to help minimize contact pressure between the opposed bearings when portions of the bearings are pressed toward one another.

In one embodiment, the bearing may be constructed and arranged to maintain an opposed bearing at substantially the same distance in a direction perpendicular to the base of the bearing, yet reduce the propensity of wear. This may be accomplished by providing a bearing having a plurality of support members to support the opposed bearing surface, the majority of the support members maintaining the distance between the opposed bearing when a loose particle or asperity causes one or more of the support members to flex.

In one embodiment, the bearing may have a plurality of support members attached to a base and may be constructed by placing a plurality of plates together. Each plate may have support members extending from a side.

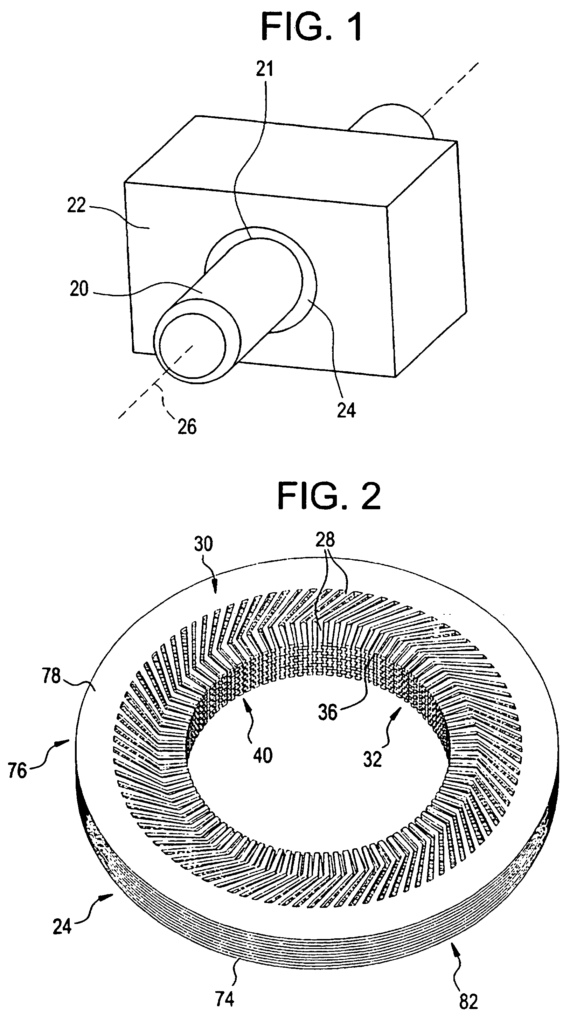

Turning now to the figures and in particular figure 1, an embodiment and an application for the present invention are shown. Figure 1 shows a shaft 20 mounted within an object 22 through a cylindrical bearing 24. The shaft may rotate about its central axis 26 or may slide along its central axis relative to the object 22. The bearing 24 aids relative movement between the shaft and the object by providing a surface that reduces frictional properties. The bearing 24 may also be removed and replaced, which can eliminate the need to replace an entire shaft or mating object when one of the sliding surfaces 21 are damaged or worn. The bearing 24 of figure 1 may be fixedly attached to the shaft 20, the object 22, or allowed to float relative to both the shaft and the object. It may comprise a complete cylindrical section; however, the bearing can also comprise multiple sections that together form a complete or partial cylinder. Additionally, there may be a pair of two separate bearings arranged concentrically, the first bearing fixedly attached to the shaft 20 and movable with respect to the second bearing, fixedly attached to the object 22.

The bearing allows sliding contact to occur in a controlled manner. By controlled manner, it is meant that motion in certain directions is allowed while it is prevented or limited in other directions. For instance, the cylindrical bearing 24 of figure 1 allows rotation about the central axis 26 of the shaft 20 and translation along the same axis but generally prevents or reduces transverse movement or bending in other directions. Other embodiments may limit one of these movements with the addition of other features, such as a pair of stops (not shown), that prevent the shaft from translating through or rotating relative to the object.

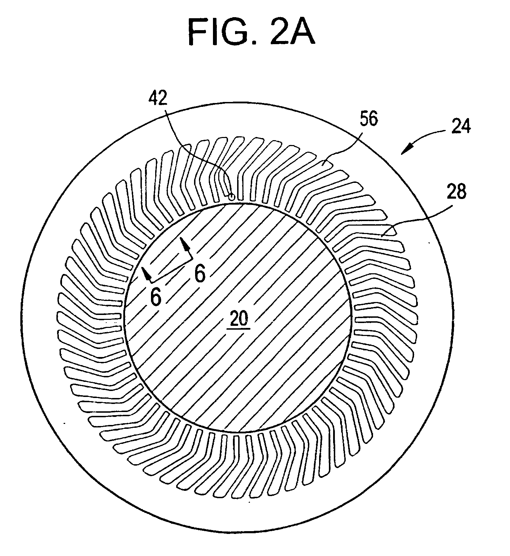

To accommodate irregularities, a plurality of independently movable supports comprise an embodiment of a bearing, such a bearing is shown in figure 2, which shows a matrix-like arrangement of support members 28 extending from a base 30. The support members cooperate to form an inner surface 32 of the cylindrical bearing 24. Each of the support members 28 comprise a first end 34 attached to the base and a distal end 36 adapted for contacting an opposed bearing. The opposed bearing may be a cylindrical shaft (not shown) passing through the center of the bearing. All of the support members together serve to support and control the shaft in sliding contact. However, the independent support members 28 provide a locally compliant surface 40 with the ability to allow loose particles to be accommodated to reduce damage suffered from plowing, and/or to prevent damage incurred from contact between surface asperities or other irregularities. The term "locally compliant" as used herein means that support members 28 may move independent from one another to accommodate any irregularities, such as loose particles or asperities 44 between the bearing and the opposed surface. In this manner, the locally compliant surface can support an opposed bearing surface while moving to accommodate asperities and loose particles at "local" points on its surface. Thus, by allowing the supports to move, loose particles are accommodated between two load bearing surfaces without plowing into either bearing surface until the loose particle can he effectively removed, for instance, through a particle trap. The support members are biased toward the opposed surface, such that after the irregularity is removed or passes the support, the support can move back in contact with the opposed surface.

A locally compliant surface also allows opposed bearings to maintain greater contact areas between their respective contact surfaces. This can be beneficial in preventing high stress contact areas. For instance, if the shaft of figure 1 attempts to bend about an axis other than the central axis, the support members at points adjacent the shaft where it is furthest from the central axis will flex greater than others. Allowing these support members to flex, the otherwise higher contact pressure may be distributed over a greater number of support members. This can result in a lower peak contact pressure than would be found in a conventional bearing. This lower contact pressure reduces the severity of problems associated with plowing and asperity interactions that cause wear and friction. In this sense, a locally compliant surface can be used to form a "globally compliant" surface.

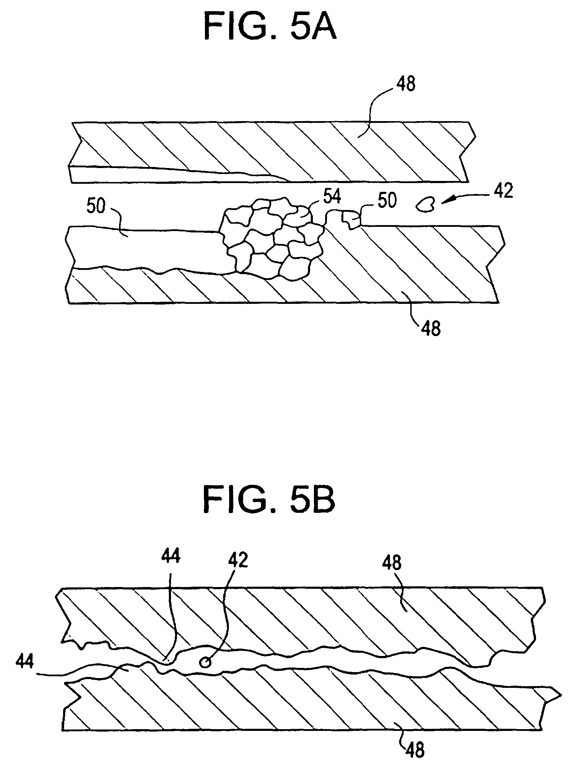

As previously mentioned, a locally compliant surface addresses several of the causes of wear and friction. Some of these causes, including plowing of a bearing by loose particles and damaging a bearing by asperity interactions, are now described in greater detail. Plowing is represented in figure 5A where two conventional bearings 48 are shown sliding relative to one another with an agglomerated particle 54 lodged between the bearings. Interaction of asperities 44 between two opposed conventional bearings 48 are shown in figure 5B.

In plowing, a particle 42 or an agglomerated particle 54 is lodged in a bearing 48 causing wear damage as the bearings are pressed toward one another while sliding relative to one another. As the bearings 48 continue to slide relative to one another, the sliding motion drags the particle along the bearings causing further damage, most typically in the form of a furrow 50. In addition to causing wear damage, the process of creating the furrow 50 and the rougher surface created by the furrow increase the amount of friction experienced between the bearings.

As particles plow into a bearing, they create additional wear particles 42 that may break away from the bearing. These new particles may agglomerate into larger particles that can cause further plowing damage. As this phenomenon continues, delamination may occur on one of the bearing surfaces. Delamination is the removal of material from one of the bearing surfaces in a sheet-like fashion. Delamination is destructive to the bearing surface resulting in significant wear, significantly increased friction and potentially even catastrophic failure of the bearing.

An asperity 44, as the term is used herein, is a small protrusions that may exist at some level on bearings 48 as shown in figure 5B. Many of these small asperities will be forced into contact with asperities 44 of the opposed bearing when they are pressed toward one another. While asperity interaction occurs on some levels to support a contact forces between bearings, larger asperities will contribute greater to-friction and wear between the surfaces. Asperities 44 may also break away from a bearing as they interact, thereby becoming loose particles 42. Most asperities range in size between 1-5 microns across, but can range from 0.5 - 30 microns across. Asperities that break away from a surface and remain between the bearings as they move relative to one another can agglomerate into larger particles that can contribute to the plowing phenomenon. Agglomerated particles 54 may range in size between 5 microns to several hundred microns. Other foreign debris particles, that can also cause plowing, typically range in sizes between 20 and 80 microns.

To accommodate an irregularity, such as a loose particle, an asperity, foreign debris, or another surface defect located between a bearing of the present invention and a support, one or more support members 28 may bend out of the way as shown, for example in figure 2A. Thus, rather than an irregularity plowing or otherwise binding, the bearing simply moves, albeit on a local level, to accommodate the irregularity. Alternatively, or in addition, a loose particle may fall into one of the gaps 56 to be disposed between adjacent support members 28. Once in such a gap 56, the tendency of the particle to inflict bearing damage is reduced. If the particle doesn't fall into a gap, it eventually may be removed from between the bearings by exiting an end.

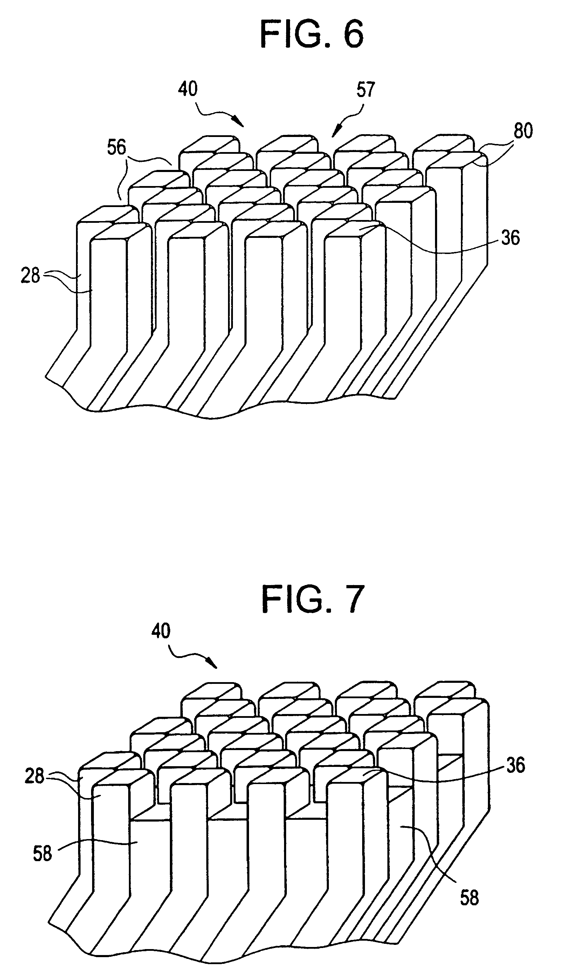

A close up perspective view of the end portions of the support members of figure 2A is shown schematically in figure 6, which is a view taken along lines 6-6 of figure 2A. Here, the locally compliant surface 40 comprises multiple support members 28 having such end portions extending perpendicularly from a base 30. In most embodiments the support members are square in cross sections with a length approximately three to fifteen times their width, although the invention is not limited to these geometries as numerous others are contemplated by the invention. The support members are spaced apart to define gaps 56 therebetween. The gaps 56 may have approximately the same dimensions as the support members themselves.

In another embodiment, such as that shown in Figure 7, a material 58 is disposed in the gaps 56 defined by adjacent support members. This material may be present in some or all of the gaps 56. It may fill entire gaps or only portions of gaps as the invention is not limited in this respect. It may comprise an element that further supports the members 28. It may also comprise a substance to prevent the accumulation of loose particles which could lodge therein and prevent the support members from bending. Such a substance might be a highly flexible material such that it does not adversely affect the bending of support members. In other embodiments, the material may comprise a lubricant that can be paid out to the bearing over time. This may occur naturally as the support members wear, as heat generated in the bearing causes the lubricant to change viscosity and migrate towards the bearing, or through other known mechanisms.

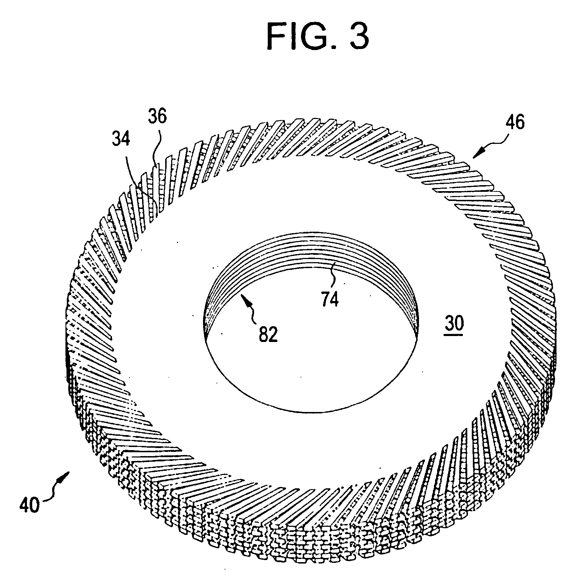

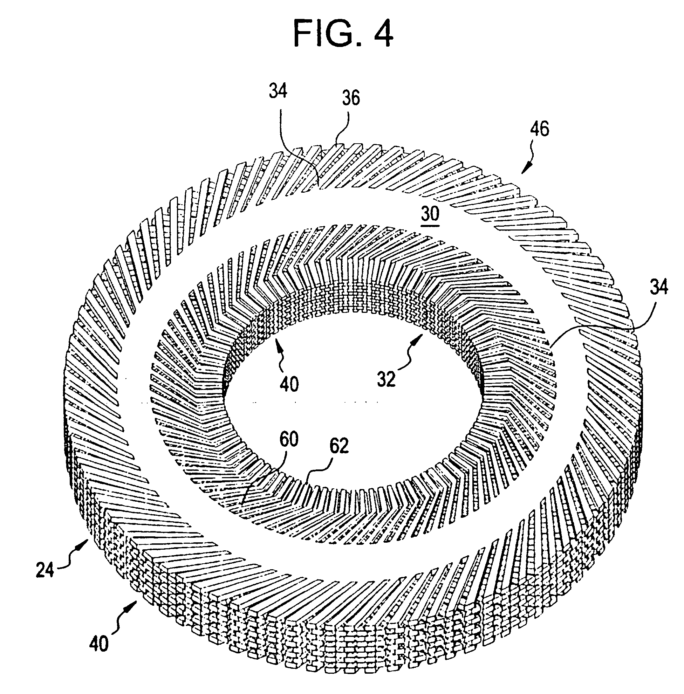

Returning now to various embodiments of the invention, and particularly to the cylindrical bearing of figure 2 which has a locally compliant inner surface. This arrangement is for supporting a shaft 20 that rotates and/or translates relative to the bearing 24 white the bearing is held by another object 22 is shown. Figures 3 and 4 show alternate embodiments of a cylindrical bearing, also with a locally compliant surface 40. The embodiment of figure 3 has a locally compliant surface on the outer cylindrical surface 46. This bearing may be held to the outer surface of a shaft to move with and support rotation or translation between the object 22 contacting the outer surface of the bearing. The embodiment of figure 4 comprises features shown in figures 2 and 3. It has locally compliant surfaces 40 comprising both its inner and outer cylindrical surfaces. This bearing may be located between a shaft 20 and the inner cylindrical surface of another object (not shown) to support relative translation and/or rotation between the shaft 20, the bearing 24 and object. This bearing is adapted to float between the surfaces of the shaft 20 and the object 22. While the locally compliant surfaces 40 of these bearings are designed to contact a conventional bearing or shaft, they may also contact another bearing with a locally compliant surface.

The outer cylindrical surfaces of the embodiments in both figures 3 and 4 have support members that are linear and non-perpendicular to the base. The inner cylindrical surfaces 32 of the embodiments in figures 2 and 3 have "dog-leg" shaped support members with their distal portion 62 aligned somewhat perpendicular with the base 30. The first portion 60 of the dog-leg members has a substantially constant cross-sectional area, which creates gaps 56 between the support members that are larger in cross-sectional area at points closer to the base 30. This provides a greater amount of room for holding loose particles 42 that may become lodged therein. While these bearings are shown with particular, locally compliant surfaces 40, they are also contemplated to comprise locally compliant surfaces according to any other aspects of the invention.

The embodiments shown in figures 2-4 show some different embodiments of support members; however, these support members can be shaped in many different ways. Also, it is noted that it is generally preferable to have numerous, very small, support members that comprise the locally compliant surface. However, applications with particular loading requirements, or applications that expect to be exposed to larger, loose particles may benefit from fewer and/or larger support members. Additionally, the costs associated with creating numerous, small support members may make some other embodiments desirable. In one embodiment, the support members have a square cross-sectional area of approximated 0.4 mm by 0.4 mm at their distal end, in other embodiments, the have distal ends may have cross-sectional areas up to 2 mm by 2 mm. Additionally most support members are three to fifteen times long as they are wide. Other suitably sized support members may be employed, as the present invention is not limited in this respect.

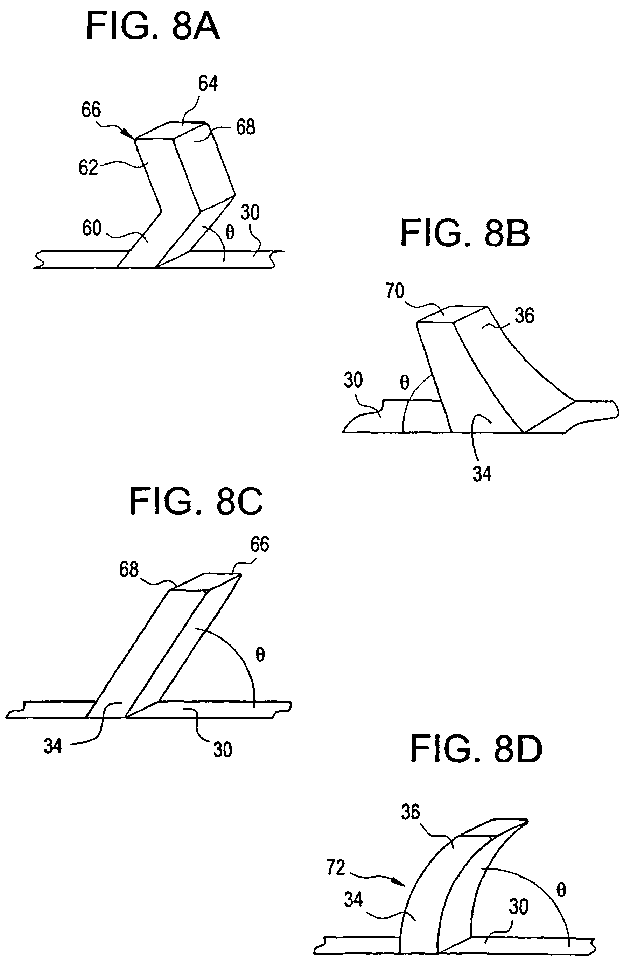

In one embodiment, as shown in Figure 8A, the support member is formed as a "dog-leg" comprising a first linear portion 60 and a second, distal, linear portion 62. Either of these linear portions 60, 62 may be aligned perpendicular to the base 30 or they may both be non-perpendicular the base. The cross-sectional area of the first and second portions of the dog-leg may be of identical length and cross-sectional area or one may be greater than the other in either or both respects. Where the end 64 of a support member is non-perpendicular to the base 30, a wedge shaped side 66 of the end may be helpful in removing loose particles 42 from between the bearings by forcing them away from the bearings and into the gaps 56. The side 68 of the end forming an acute angle with the opposed bearing may be useful in promoting the bending of a support member 28 when a loose particle 42 becomes wedged between the opposed bearing and the end 64. The configuration of the wedge shaped side and the side forming an acute angle may also be formed by beveling or chamfering the sides of a support member 28, or arranging the support members in different manners as the invention is not limited in this respect.

Figure 8B shows a support member of varying cross-sectional area. Varying cross-sectional area may help achieve a flexing characteristic desired for a particular application. It may also allow the end 64 of a support member to grow in cross-sectional area as it experiences any wear through prolonged contact with the opposed bearing. As the end 64 is worn away causing the length of the support member to decrease, the corresponding area 70 of the distal end will increase. When this occurs over numerous support members, it will increase the net area of the locally compliant surface. This increase in area will reduce the contact pressure experienced by each support member, which may reduce the wear rate experienced thereafter. The support members are still able to support the opposed surface even though their length decreases because they have a tendency to bend or flex toward the opposed surface, in part due to the cantilevered and angled arrangement.

Additional embodiments of support members 28 are shown in figures 8C and 8D. Figure 8C depicts a support member that is aligned non-perpendicular to the base 30, while figure 8D depicts a support member comprising an arcuate shape 72. The distal end of these support members may be arranged to extend from the base in a perpendicular or non-perpendicular manner. The arcuate shape 72 may comprise a constant curvature or alternatively a compound curvature as may be suited by a particular application. The support members 28 of any of the embodiments described herein may be used in conjunction with other identically shaped support members, or they may be used with any combination of support members described or contemplated by this invention. Although various examples of the shapes of the support members are shown, it should be appreciated that the present invention is not limited in this respect as other suitable shaped support members be employed. Also, the support members may extend from the base in any suitable direction provided that the distal end can move to accommodate any asperities or particles. Thus, although in certain embodiments, the support members are shown in particular angles 0 relative to the base, any angle may be employed, provided the support can move, for example, bend or flex toward and away from the opposed surface.

Each of these support members can be made with a wide variety of materials including, but not limited to metals such as aluminum, brass, bronze, steel, titanium, nickel, or non-metals, such as polymers, elastomers, nylons, or composites as the invention is not limited in this respect, provided the material offers the desired flexing characteristics.

Various embodiments of the present invention may be manufactured through any suitable method. Any of these methods may be used to create locally compliant surfaces with particular characteristics resulting from a mix of different support member geometries that are used, different support member materials that are used, or the spacing between the support members.

In one embodiment, as shown in figures 2-4 a plurality of thin, washer-like disks or plates 74 are stacked next to each other to form the bearing, including the support members. Forming the bearing from a stack 82 of thin plates 74 is one way of providing certain benefits. For instance, the configuration of bearings made from stacked plates can be adjusted easily. A designer can easily configure a bearing by arranging a construction of already designed thin plate structures 74. For a particular application where a certain length of bearing or other dimension is desired, the designer may only need to decide how many thin plates 74 are needed to accommodate the particular length and what type of support members 28 the plates should have. In these embodiments, as with others, plates 74 of varying thickness, plates 74 made of different materials and/or plates with different types or shapes of support members 28 may be mixed to provide different overall characteristics of the bearing. For instance, if the support members associated with the outermost plates 78 are more flexible, the shaft 20 may be allowed to bend about an axis other than the central axis of the shaft. This effect may be desirable in some applications. In other applications the opposite effect may be desired, where plates with stiffer support members may be placed near the outer edges 80 of the bearing to prevent such motion. Locally compliant bearings made from other manufacturing processes may accomplish the same effects.

Figures 2-4 show adjacent plates with similar support members on their sides, but stacked with their support members 28 extending in opposite directions. This alternate support member configuration creates a matrix of support members extending from the base 30 in different directions. This particular configuration means that a support members 28 bending toward an adjacent plate, in this case, will likely contact another support member after bending a short distance. When it bends in a direction parallel to the direction of the plates, it may travel a greater distance. In this manner, the support members 28 may be adapted to move differently in different directions. Similar results may be obtained by modifying the cross-sectional shape of the support members. For instance, a rectangular cross-section will have different bending characteristics in the various directions perpendicular to its edges 80. Of course, the present invention is not limited in this respect as the support members may extend in the same direction.

While the embodiment of figures 2-4 are shown comprising a stack of thin plates, each with support members 28 extending therefrom, other embodiments may include spacer plates (not shown) between adjacent plates. The same effect may be accomplished in embodiments manufactured through other techniques by simply creating a space on all sides of each support member. Such embodiments might allow the support members 28 to bend more readily in certain directions. The embodiment shown in figure 6 has gaps 56 arranged on four sides of the support members 28. Other embodiments may be arranged such that the gaps extend continuously from one edge of the bearing to an opposite edge of the bearing. Such an arrangement may provide easy access to the gaps for cleaning out accumulated particles.

Particular benefits have been described as they exist in particular embodiments that comprise a stack of thin plates. However these same benefits and others may be obtained with locally compliant structures manufactured through other techniques. Some of these techniques include making a locally compliant surface in whole or part by removing material from a monolithic structure through, for example, machining, wire EDM, shearing, laser cutting, or water cutting to name a few. Through other manufacturing methods, a locally compliant surface may be formed in place by a material adding process, such as stereo lithography, 3D printing, or casting, to name a few. Other embodiments may also be formed through stamping or bending of materials. The various embodiments described and contemplated by the invention may also comprise an assembly of components that define the locally compliant surface, like the thin plate structures. Another example of a locally compliant surface formed from an assembly of elements includes an embodiment where the support members are attached to a base by separate elements. These elements may be made of rubber, plastic, or any other suitable material and may actually be the element that allows the support members to bend as will be discussed. While a few manufacturing processes are discussed, other suitable processes may also be used as the invention is not limited to any of the configurations or processes discussed herein.

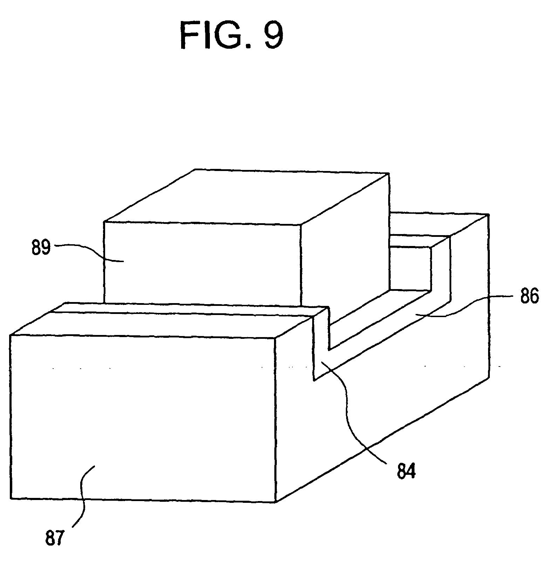

Figure 9 is a schematic view of a linear bearing 86 according to another aspect of the invention. The bearing 86 comprises a U-shaped cross-section 84 to guide translation in one direction; however, other embodiments may simply comprise a planar bearing such that the objects 87, 89 may translate relative to one another in multiple directions as the invention is not limited in this respect. As with the cylindrical bearing 24, the linear bearing 86 may be fixedly attached to either of the objects 87, 89, or may equivalently be allowed to float between the two objects. The linear bearing 86 may also comprise a pair of bearings, each attached to one of the objects. The linear bearings 86 may be designed to accommodate continuous, or intermittent contact between the objects 87, 89. For instance, with intermittent contact, the first object may be in an application where it slides completely off of the second object by translating past one of the edges, or it may be an application where it lifts vertically off of the bearing.

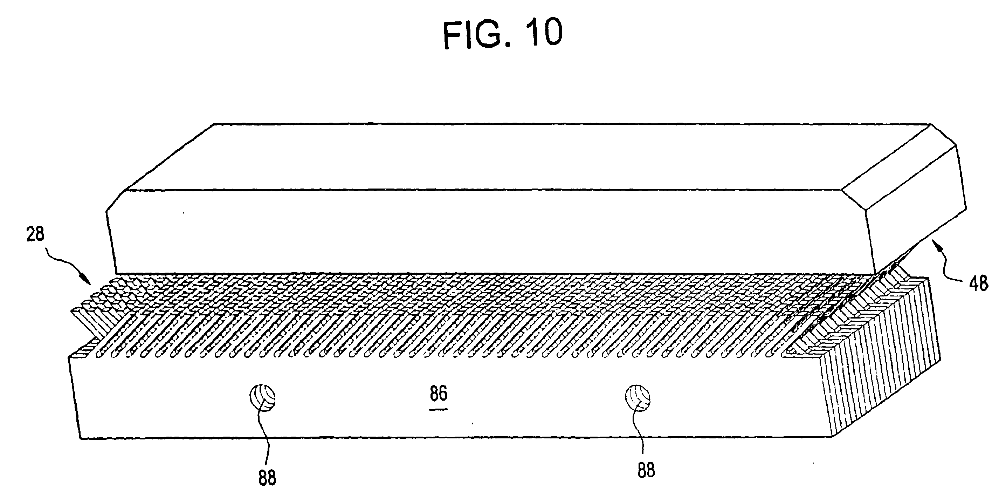

Any of the features associated with the previously discussed embodiments may also be incorporated into a linear bearing configuration and vice-versa. For instance, the embodiment shown in figure 10 comprises a plurality of stacked plates 74 each having a plurality of support members 28, forming a linear bearing with a locally compliant surface 40. The bearing is shown opposing a conventional bearing 48, although it could also oppose another locally compliant surface 40. The particular bearing shown in figure 10 may allow translation or rotation in any direction parallel to its locally compliant surface. Other embodiments may incorporate features to limit this motion or to allow additional motion. Such additional motion may include one bearing 86 tilting relative to the other.

The plates forming the bearings may be attached to one another using any suitable technique. In one embodiment, as shown in Figure 10, holes 88 in each of the plates 74 may accept a dowel, rivet or screw to align and/or lock the plates together. Other features, such as tabs, recesses at an edge of the thin plates, protrusions placed on the side of the thin plates, or even adhesives, welds, or stakes may be used to attach the plates together, as the invention is not limited in this respect. While the plates 74 are shown with a locking feature that may be used to hold them together, other applications may not require the plates 74 to be fixed with respect to one another. Some applications may even allow the plates 74 to move relative to one another during operation. Still, other applications may comprise locally compliant surfaces formed from a single piece of material, thereby eliminating the need to attach plates together as the invention is not limited in this respect.

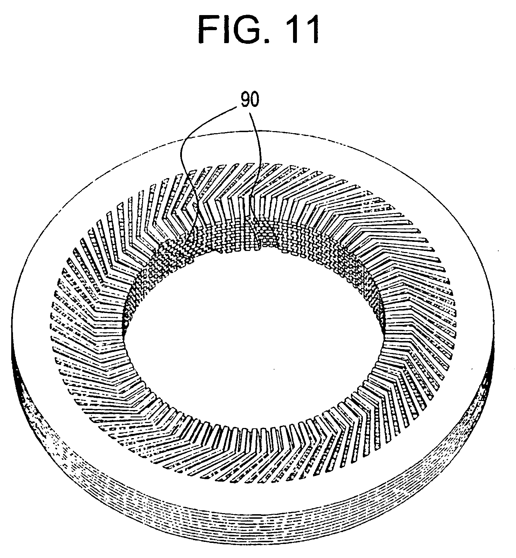

Figure 11 shows yet another embodiment of a locally compliant surface 40. Here, the embodiment of figure 2 is shown with grooves 90, which may be helically shaped, disposed on the locally compliant surface. These grooves are one form of particle trap that may help remove loose particles 42 from between the bearings. As a shaft 20 rotates relative to the locally compliant surface, any particles 42 will be allowed to fall into the groove 90 and thereafter will be trapped or pushed out one side of the bearing 24 for removal. Such grooves help to remove foreign particles 42 that are too large to fit in the gaps 56 disposed between the support members 28. While the groove is shown to be a helix extending continually from one side to the other, it is not limited to this configuration. The groove 90 may also be linear or comprise any other shape that serves to remove particles 42 disposed between the bearings, as the invention is not limited to any particular shape. Furthermore, the grooves do not need to extend completely from one side of the bearing to another. For instance, a groove 90 may begin near the middle and extend towards only one lateral side, or there may be multiple grooves extending from near the center of the surface towards alternating sides of the bearing. While the groove 90 is shown associated with an cylindrical bearing 24, it may also be present in linear bearings 86 or any other bearing configurations, as the invention is not limited in this respect.

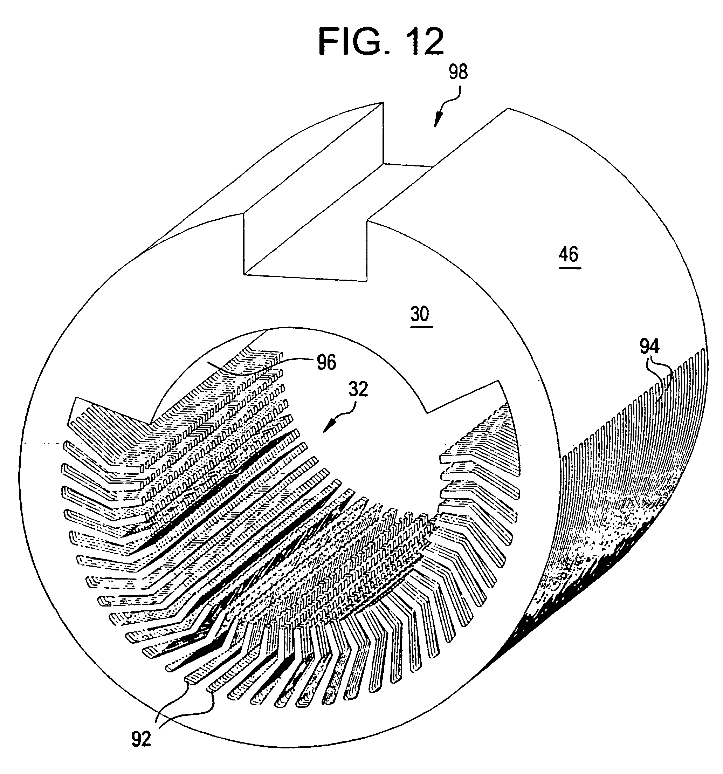

Figure 12 shows a configuration of a bearing that is made with a method different than those depicted in figures 2-4, 10, and 11. This bearing 24 does not comprise multiple, stacked plates 74, but rather one solid, monolithic piece of material in which multiple support members 28 are fashioned to create a locally compliant surface 40. The locally compliant surface of this bearing is made by cutting numerous grooves 92 parallel to the central axis of the cylinder. Numerous slices 94 are also made perpendicular to the central axis of the cylinder to intersect the grooves and create numerous support members 28 extending inwardly of the base 30. In this particular embodiment, the locally compliant surface 40 does not comprise the entire inner surface 32, but rather only a portion thereof. Other embodiments can be made comprising the entire inner surface, any portion of the outer surface 46 or for any surface of other types of bearings desired. This particular bearing embodiment can be used in an application where a load is only apply in one direction. In this case, the opposite inner side 96 of the bearing comprises a conventional bearing surface that does not have a significant force applied against it. The outer cylindrical surface 46 of this embodiment contains a keyway 98 for locking the orientation of the bearing to the object which it is mounted into. This keyway, or other features accomplishing the same effect may be incorporated into other embodiments of the invention as the invention is not limited in this respect.

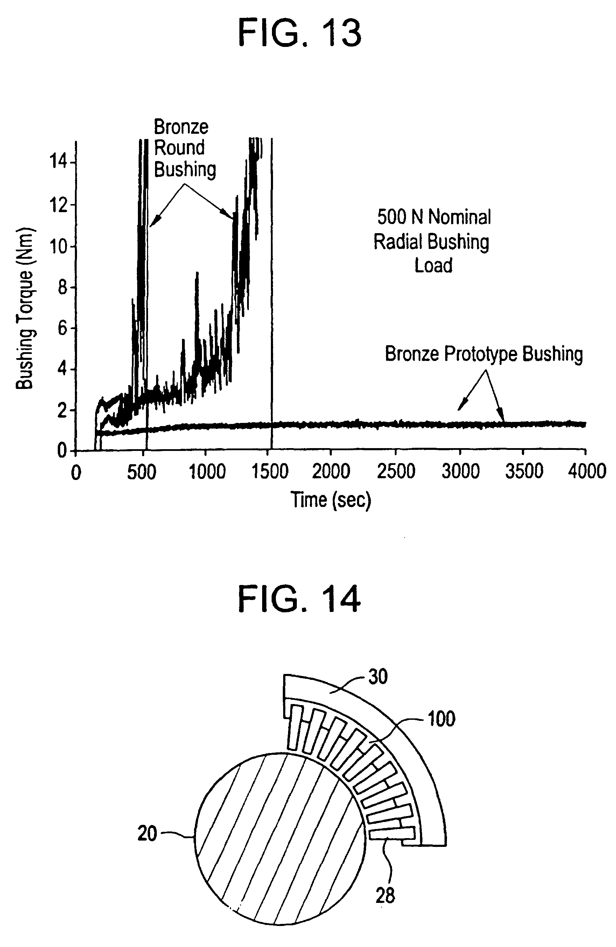

Figure 13 displays the results of a test performed on both a prototype bearing with a locally compliant surface similar to that shown in Figure 12, and a conventional bearing. Both the prototype and conventional bearing were manufactured from the same aluminum-bronze alloy material. A nominal load of 500 Newtons was applied against each bearing through a shalt manufactured from hardened 1060 steel, which was rotated within each bearing. A torque associated with friction was measured for each bearing as the test progressed. Figure 13 shows the torque associated with each bearing as it changed over the time in which the test was performed. The frictional torque value associated with the bearing of figure 12 in each test trial remained substantially constant over time. However, the frictional torque associated with the conventional bearing increased dramatically after a relatively short period of time. This increase is associated with excessive wear, asperity interaction or other irregularities and ultimately the failure of the conventional bearings. Further tests were performed where a sand mixture consisting of particles less than 0.4 millimeters in diameter was added to both the conventional and prototype bushings. In this test, the frictional torque experienced by the bearing of figure 12 did increase; however, the bearing did not fail. The conventional type bearing seized immediately after the sand mixture was introduced.

Figure 14 shows another embodiment of a bearing formed from an assembly of elements. The opposed bearing surface in this example comprises a conventional shaft 20. The cylindrical bearing includes a series of load bearing support members 28 disposed in an elastomeric compound 100 (such as synthetic rubber, neoprene, flexible plastic etc.). In one embodiment, the support members are molded into the elastomeric compound. This elastomeric compound is also bonded to some solid outer base 30 such as a metal tube. Local compliance can be obtained with such an embodiment when the support members 28 are arranged at angles, or when the support members are arranged perpendicular to the shaft 20. The elastomeric compound 100 can be flexible and mildly compressible, allowing each support to move independently of the surrounding support members, thereby achieving local compliance. This type of a design can be made for extremely high loading as the support member size can be very small, allowing many support members and corresponding contact points. Furthermore, the load on each support member 28 can be distributed over greater area than in other embodiments as the cross sectional area of the support member can contact a greater area of the base 30 or elastomeric compound 100. That is, the area of the support member is pi times the diameter of the pin squared, but the region over which the support member 28 is bonded to the base 30 can be the perimeter of the support 28 shaft times the length of the embedded support member 28.

Other embodiments of the invention may include locally compliant surfaces applied to rolling contact bearings. While such bearings are primarily designed for rolling contact, they do have a sliding component of friction and wear on a micro level. Suitable applications of locally compliant surfaces may be used on rolling contact bearings to reduce wear and friction, as well as possibly the systems more robust and resistant to impact loading.

## Claims

1. A contact bearing (24) adapted to accommodate irregularities, asperities, or loose particles, the bearing comprising:
a base (30); and
a plurality of cantilevered support members (28) in a matrix-like arrangement, each having a first end (34) directly or indirectly attached to the base and a second, free end (36) spaced from the base, the second end constructed and arranged for sliding contact with an opposed bearing surface (20), wherein the plurality of support members are constructed and arranged to support (32) the opposed bearing surface and each second end is constructed and arranged to move to accommodate any irregularities, asperities or loose particles (44) that may be between the second end and the opposed bearing surface.

2. The contact bearing of claim 1, wherein the support members are further constructed and arranged to support the an opposed surface at a substantially fixed distance from the base, and whereby when at least one of the plurality of support members moves, the others of the plurality of support members maintains the opposed surface substantially at the fixed distance.

3. The contact bearing of any of the preceding claims, further comprising:
a plurality of plates (74), the plates being arranged in a stacked configuration (82) such that a surface of one plate is arranged adjacent a surface of another plate; and
wherein each plate comprises at least a portion of the base and the plurality of support members extending from the base.

4. The contact bearing of any of the preceding claims, wherein the plurality of support members comprises a plurality of spaced apart support members that define gaps therebetween, whereby at least some of the support members are adjacent at least three gaps.

5. The contact bearing of claim 4, further comprising an elastic element (58) disposed in at least a some of the gaps.

6. The contact bearing of claim 4, further comprising a lubricant (58) disposed in at least some of the gaps.

7. The contact bearing of any of the preceding claims, wherein each support member is formed integral with the base.

8. The contact bearing of any of claims 1-6, wherein the base comprises a rigid base (30) and an elastomeric member (100), the plurality of cantilevered support members supported by the elastomeric member of the base.

9. The contact bearing of claim 8, wherein the plurality of cantilevered support members is spaced from the rigid base.

10. The contact bearing of any of the preceding claims, wherein each support member has a first flexing direction with a first flexing characteristic and second flexing direction with a second flexing characteristic, wherein the first and second flexing characteristics are substantially similar.

11. The contact bearing of any of the preceding claims, wherein base is cylindrical and wherein the support members extend inwardly of the base.

12. The contact bearing of any of the preceding claims, wherein the base is cylindrical and wherein the support members extend outwardly of the base.

13. The contact bearing of any of the preceding claims, wherein the base is cylindrical and wherein a first set of the plurality of support members extend inwardly of the base and wherein a second set of the plurality of support members extend outwardly of the base.

14. The contact bearing of any of the preceding claims, wherein the base is planar.

15. The contact bearing of any of the preceding claims, wherein at least one of the plurality of support members is linear.

16. The contact bearing of claim 15, wherein the at least one linear support member extends perpendicularly from the base.

17. The contact bearing of claim 15, wherein the at least one linear support member extends non-perpendicularly from the base.

18. The contact bearing of any of the preceding claims, wherein at least one of the plurality of support members is non-linear (72).

19. The contact bearing of any of the preceding claims, wherein at least one of the plurality of support members comprises a first portion (60) and a second portion (62), the first portion extending in a line that is non-perpendicular to the base and the second portion extending from the first portion in a line that is perpendicular to the base.

20. The contact bearing of any of the preceding claims, wherein each support member comprises a cross sectional area that varies along a length of the support member.

21. The contact bearing of any of the preceding claims, further comprising a groove (90) defined by a portion of the second ends of the support members, the groove constructed and arranged to remove particles from the contact bearing.

22. The contact bearing of any of the preceding claims, wherein each support member has a generally square shaped cross-sectional area of less than approximately 0.4 mm by 0.4 mm.

23. The contact bearing of any claims 1-22, wherein each support member has a generally square shaped cross-sectional area of less than approximately 0.2 mm by 0.2 mm.

24. The contact bearing of any of the preceding claims, in combination with the opposed bearing surface.

25. The combination of claim 24, wherein the opposed bearing surface comprises a cylindrical shaft.

26. The combination of claim 25, wherein the shaft rotates relative to the bearing.

27. The contact bearing of any of claims 1-9 or any of claims 11-26 as depending from any of claims 1-9, wherein each support member has a first flexing direction with a first flexing characteristic and second flexing direction with a second flexing characteristic, wherein the first and second flexing characteristics are substantially different.

28. A method of accommodating irregularities, asperities, or loose particles in a contact bearing (24), the method comprising:
providing a matrix-like arrangement of a plurality of support members (28) that define a first sliding contact bearing surface in direct contact with a second sliding contact bearing surface;
providing a base (30) for attaching the plurality of support members defining the first sliding contact bearing surface thereto, such that the plurality of support members extend therefrom; and
flexing at least one of the plurality of support members with respect to the second sliding contact bearing surface such that at least one of the first sliding contact bearing surfaces moves out of direct contact with the second sliding contact bearing surface to accommodate any irregularities, asperities, or loose particles between the first and second surfaces.

29. The method of claim 28, further comprising:
maintaining a substantially constant distance between the base and the second bearing surface.

30. The method of claim 28, further comprising:
removing particles from between the first sliding contact bearing surface and the second sliding contact bearing surface;
allowing the particles to reside in or travel through gaps defined by in the first sliding contact bearing surface.

## Patentansprüche

1. Kontaktlager (24) zum Ausgleichen von Unregelmäßigkeiten, Schroffheiten oder losen Partikeln, welches Lager eine Basis (30) aufweist sowie mehrere einseitig eingespannte Stützelemente (28) in einer matrixartigen Anordnung, jeweils mit einem ersten Ende (34), das direkt oder indirekt an der Basis angebracht ist, und einem zweiten, freien Ende (36), das von der Basis beabstandet ist, wobei das zweite Ende für einen Gleitkontakt mit einer gegenüberliegenden Lagerfläche (20) aufgebaut und angeordnet ist, wobei die mehreren Stützelemente dazu aufgebaut und angeordnet sind, die gegenüberliegende Lagerfläche zu stützen, und jedes zweite Ende dazu aufgebaut und angeordnet ist, sich so zu bewegen, dass es Unregelmäßigkeiten, Schroffheiten oder lose Partikel (44) ausgleicht, die sich zwischen dem zweiten Ende und der gegenüberliegenden Lagerfläche befinden könnten.

2. Kontaktlager nach Anspruch 1, wobei die Stützelemente außerdem so aufgebaut und angeordnet sind, dass sie eine gegenüberliegende Fläche in einem im wesentlichen festen Abstand von der Basis stützen, und wobei, wenn zumindest eines der mehreren Stützelemente sich bewegt, die anderen Stützelemente die gegenüberliegende Fläche im wesentlichen in dem festen Abstand halten.

3. Kontaktlager nach einem der vorangehenden Ansprüche, weiter mit mehreren Platten (74), die in einer gestapelten Anordnung (82) so angeordnet sind, dass eine Oberfläche einer Platte angrenzend an eine Oberfläche einer anderen Platte angeordnet ist, und wobei jede Platte zumindest einen Bereich der Basis aufweist und die mehreren Stützelemente, die sich von der Basis aus erstrecken.

4. Kontaktlager nach einem der vorangehenden Ansprüche, wobei die mehreren Stützelemente mehrere beabstandete Stützelemente aufweisen, die Lücken zwischen sich definieren, wobei zumindest einige der Stützelemente angrenzend an zumindest drei Lücken sind.

5. Kontaktlager nach Anspruch 4, weiter mit einem elastischen Element (58), das in zumindest einigen der Lücken vorgesehen ist.

6. Kontaktlager nach Anspruch 4, weiter mit einem Schmiermittel (58), das in zumindest einigen der Lücken vorgesehen ist.

7. Kontaktlager nach einem der vorangehenden Ansprüche, wobei jedes Stützelement integral mit der Basis ausgeformt ist.

8. Kontaktlager nach einem der Ansprüche 1 bis 6, wobei die Basis eine starre Basis (30) und ein elastomeres Element (100) aufweist, und wobei die mehreren einseitig eingespannten Stützelemente von dem elastomerischen Element der Basis gestützt sind.

9. Kontaktlager nach Anspruch 8, wobei die mehreren einseitig eingespannten Stützelemente von der starren Basis beabstandet sind.

10. Kontaktlager nach einem der vorangehenden Ansprüche, wobei jedes Stützelement eine erste Flexrichtung mit einer ersten Flexeigenschaft und eine zweite Flexrichtung mit einer zweiten Flexeigenschaft hat, wobei die erste und die zweite Flexeigenschaft im wesentlichen gleich sind.

11. Kontaktlager nach einem der vorangehenden Ansprüche, wobei die Basis zylindrisch ist und die Stützelemente sich einwärts von der Basis erstrecken.

12. Kontaktlager nach einem der vorangehenden Ansprüche, wobei die Basis zylindrisch ist und die Stützelemente sich auswärts von der Basis erstrecken.

13. Kontaktlager nach einem der vorangehenden Ansprüche, wobei die Basis zylindrisch ist und ein erster Satz der mehreren Stützelemente sich einwärts von der Basis erstreckt und ein zweiter Satz der mehreren Stützelemente sich auswärts von der Basis erstreckt.

14. Kontaktlager nach einem der vorangehenden Ansprüche, wobei die Basis planar ist.

15. Kontaktlager nach einem der vorangehenden Ansprüche, wobei zumindest eines der mehreren Stützelemente linear ist.

16. Kontaktlager nach Anspruch 15, wobei das zumindest eine lineare Stützelement sich senkrecht von der Basis aus erstreckt.

17. Kontaktlager nach Anspruch 15, wobei das zumindest eine lineare Stützelement sich nicht rechtwinklig von der Basis aus erstreckt.

18. Kontaktlager nach einem der vorangehenden Ansprüche, wobei zumindest eines der mehreren Stützelemente nicht linear ist (72).

19. Kontaktlager nach einem der vorangehenden Ansprüche, wobei zumindest eines der mehreren Stützelemente einen ersten Bereich (60) und einen zweiten Bereich (62) aufweist, wobei sich der erste Bereich in einer Linie erstreckt, die nicht rechtwinklig zu der Basis verläuft, und der zweite Bereich sich von dem ersten Bereich aus in einer Linie erstreckt, die rechtwinklig zur Basis verläuft.

20. Kontaktlager nach einem der vorangehenden Ansprüche, wobei jedes Stützelement einen Querschnittsflächenbereich aufweist, der entlang einer Länge des Stützelements variiert.

21. Kontaktlager nach einem der vorangehenden Ansprüche, weiter mit einer Nut (90), die durch einen Bereich der zweiten Enden der Stützelemente definiert ist, wobei die Nut aufgebaut und angeordnet ist, um Partikel von dem Kontaktlager zu entfernen.

22. Kontaktlager nach einem der vorangehenden Ansprüche, wobei jedes Stützelement einen im wesentlichen quadratisch geformten Querschnittsflächenbereich von weniger als ungefähr 0,4 x 0,4 mm hat.

23. Kontaktlager nach einem der Ansprüche 1 bis 22, wobei jedes Stützelement einen im allgemeinen quadratisch geformten Querschnittsflächenbereich von weniger als 0,2 x 0,2 mm hat.

24. Kontaktlager nach einem der vorangehenden Ansprüche, in Kombination mit der gegenüberliegenden Lagerfläche.

25. Kombination nach Anspruch 24, wobei die gegenüberliegende Lagerfläche eine zylindrische Welle aufweist.

26. Kombination nach Anspruch 25, wobei die Welle sich relativ zu dem Lager dreht.

27. Kontaktlager nach einem der Ansprüche 1 bis 9 oder einem der Ansprüche 11 bis 26, wenn abhängig von einem der Ansprüche 1 bis 9, wobei jedes Stützelement eine erste Flexrichtung mit einer ersten Flexeigenschaft und eine zweite Flexrichtung mit einer zweiten Flexeigenschaft hat, wobei die erste und die zweite Flexeigenschaft im wesentlichen unterschiedlich sind.

28. Verfahren zum Ausgleichen von Unregelmäßigkeiten, Schroffheiten oder losen Partikeln in einem Kontaktlager (24), mit den folgenden Schritten:
Vorsehen einer matrixartigen Anordnung von mehreren Stützelementen (28), die eine erste Gleitkontaktlagerfläche in direktem Kontakt mit einer zweiten Gleitkontaktlagerfläche definieren,
Vorsehen einer Basis (30), um daran die mehreren Stützelemente anzubringen, die die erste Gleitkontaktlagerfläche definieren, so dass die mehreren Stützelemente sich von dort aus erstrecken, und
Flexen bzw. Verbiegen zumindest eines der mehreren Stützelemente bezüglich der zweiten Gleitkontaktlagerfläche so, dass zumindest eine der ersten Gleitkontaktlagerflächen sich außer direktem Kontakt mit der zweiten Gleitkontaktlagerfläche bewegt, um irgendwelche Unregelmäßigkeiten, Schroffheiten oder lose Partikel zwischen der ersten und der zweiten Oberfläche auszugleichen.

29. Verfahren nach Anspruch 28, weiter mit dem Schritt des Beibehaltens eines im wesentlichen konstanten Abstands zwischen der Basis und der zweiten Lagerfläche.

30. Verfahren nach Anspruch 28, wobei außerdem Partikel zwischen der ersten und der zweiten Gleitkontaktlagerfläche entfernt werden, und es den Partikeln ermöglicht wird, sich in den durch die erste Gleitkontaktlagerfläche definierten Spalten zu befinden oder sich durch diese hindurch zu bewegen.

## Revendications

1. Palier à contact (24) adapté pour accommoder les irrégularités, les aspérités ou les particules libres, le palier comprenant
une base (30), et
une série de membres de support (28), reposant librement par leurs extrémités dans une disposition de type matrice, chacun ayant une première extrémité (34) directement ou indirectement attachée à la base et une deuxième extrémité libre (36), espacée de la base, la deuxième extrémité étant conçue et disposée pour être en contact glissant avec une surface (20) opposée du palier, dans lequel les multiples membres de support sont conçus et disposés pour supporter (32) la surface du palier opposée et chaque deuxième extrémité est conçue et disposée pour se déplacer pour recevoir toute irrégularité, aspérité ou particule libre (44), qui peut se trouver entre la deuxième extrémité et la surface opposée du palier.

2. Palier à contact selon la revendication 1, dans lequel les membres de support sont en outre, conçus et disposés pour supporter la surface opposée à une distance sensiblement fixée de la base, et dans lequel, lorsque au moins un de la série des membres de support bouge, les autres membres de support de la série maintiennent la surface opposée à sensiblement la distance fixée.

3. Palier à contact selon l'une quelconque des revendications précédentes, comprenant en outre :
une série de plaques (74), les plaques étant disposées en configuration empilée (82), de telle manière qu'une surface d'une plaque est disposée de manière adjacente à la surface d'une autre plaque, et où chaque plaque comprend au moins un partie de la base et la série de membres de support s'étendant depuis la base.

4. Palier à contact selon l'une quelconque des revendications précédentes, dans lequel la série de membres de support comprend une série de membres de support espacés, qui définissent des brèches entre eux, où au moins certains des membres de support sont adjacents à au moins trois brèches.

5. Palier à contact selon la revendication 4, comprenant en outre un élément élastique (58) disposé dans au moins quelque unes des brèches.

6. Palier à contact selon la revendication 4, comprenant en outre, un lubrifiant (58) disposé dans au moins quelque unes des brèches.

7. Palier à contact selon l'une quelconque des revendications précédentes, dans lequel chaque membre de support est formé en une pièce avec la base.

8. Palier à contact selon l'une quelconque des revendications 1 à 6, dans lequel la base comprend une base rigide(30) et un membre élastomère (100), la série de membre de support (28), reposant librement par leurs extrémités, étant supporté par le membre élastomère de la base.

9. Palier à contact selon la revendication 8, dans lequel la série de membres de support , reposant librement par leurs extrémités, est espacée de la base rigide

10. Palier à contact selon l'une quelconque des revendications précédentes, dans lequel chaque membre de support présente une première direction de flexion avec une première caractéristique de flexion et une deuxième direction de flexion avec une deuxième caractéristique de flexion dans lequel la première et la deuxième caractéristiques de flexion sont sensiblement similaires.

11. Palier à contact selon l'une quelconque des revendications précédentes, dans lequel la base est cylindrique et dans lequel les membres de support s'étendent vers l'intérieur de la base.

12. Palier à contact selon l'une quelconque des revendications précédentes, dans lequel la base est cylindrique et dans lequel les membres de support s'étendent vers l'extérieur de la base.

13. Palier à contact selon l'une quelconque des revendications précédentes, dans lequel la base est cylindrique et dans lequel un premier jeu de la série des membres de support s'étendent vers l'intérieur de la base et un deuxième jeu de la série des membres de support s'étendent vers l'extérieur de la base.

14. Palier à contact selon l'une quelconque des revendications précédentes, dans lequel la base est plane.

15. Palier à contact selon l'une quelconque des revendications précédentes, dans lequel au moins un de la série des membres de support est linéaire.

16. Palier à contact selon la revendication 15, dans lequel le au moins un membre de support linéaire s'étend perpendiculairement à la base.

17. Palier à contact selon la revendication 15, dans lequel le au moins un membre de support linéaire s'étend non perpendiculairement à la base.

18. Palier à contact selon l'une quelconque des revendications précédentes, dans lequel au moins un de la série des membres de support est non linéaire (72).

19. Palier à contact selon l'une quelconque des revendications précédentes, dans lequel au moins un de la série des membres de support comprend une première partie (60) et une deuxième partie (62), la première partie s'étendant selon une ligne qui est non perpendiculaire à la base et la deuxième partie s'étendant depuis la première partie, selon une ligne qui est perpendiculaire à la base.

20. Palier à contact selon l'une quelconque des revendications précédentes, dans lequel chaque membre de support comprend une section transversale qui varie sur la longueur du membre de support.

21. Palier à contact selon l'une quelconque des revendications précédentes, comprenant en outre une encoche (90) définie par une partie des deuxièmes extrémités des membres de support, l'encoche étant conçue et disposée de manière à éliminer les particules du palier à contact.

22. Palier à contact selon l'une quelconque des revendications précédentes, dans lequel chaque membre de support a une section transversale sensiblement carrée de moins qu'environ 0,4 mm par 0,4 mm.

23. Palier à contact selon l'une quelconque des revendications 1 à 22, dans lequel chaque membre de support a une section transversale sensiblement carrée de moins qu'environ 0,2 mm par 0,2 mm.

24. Palier à contact selon l'une quelconque des revendications précédentes, en combinaison avec la surface de palier opposée.

25. Combinaison selon la revendication 24, dans laquelle la surface de palier opposée comprend un arbre cylindrique.

26. Combinaison selon la revendication 25, dans laquelle l'arbre est en rotation par rapport au palier.

27. Palier à contact selon l'une quelconque des revendications 1 à 9 ou l'une quelconque des revendications 11 à 26 comme dépendant de l'une quelconque des revendications 1 à 9, dans lequel chaque membre de support a une première direction de flexion avec une première caractéristique de flexion et une deuxième direction de flexion avec une deuxième caractéristique de flexion, où les première et deuxième caractéristiques de flexion sont sensiblement différentes.

28. Procédé d'accommodation des irrégularités, des aspérités ou des particules libres dans un palier à contact (24), le procédé comprenant :
la disposition d'un arrangement de type matrice d'une série de membres de support (28), qui définissent une première surface glissante du palier à contact, en contact direct avec une deuxième surface glissante du palier à contact ;
la disposition d'une base (30) pour attacher la série de membres de support définissant la première surface glissante du palier à contact, de sorte que la série de membres de support s'étend depuis celle=ci, et
la flexion d'au moins un de la série des membres de support par rapport à la deuxième surface glissante du palier à contact, de sorte qu'au moins une des premières surfaces glissantes du palier à contact se déplace du contact direct avec la deuxième surface glissante du palier à contact pour accommoder toute irrégularité, aspérité ou particule libre entre les première et deuxième surfaces.

29. Procédé selon la revendication 28, comprenant en outre :
le maintien d'une distance sensiblement constante entre la base et la deuxième surface du palier.

30. Procédé selon la revendication 28, comprenant en outre :
l'élimination des particules d'entre la première surface glissante du palier à contact et la deuxième surface glissante du palier à contact ;
le fait de permettre aux particules de rester dans ou de passer par les brèches définies par la première surface glissante du palier à contact.
